# EUROPEAN PATENT APPLICATION

(11) **EP 1 349 250 A1**
(43) Date of publication of application: **01.10.2003**
(21) Application number: 03380060.8
(22) Date of filing: 14.03.2003
(51) Int. Cl.: H02G 3/18

(54) **Mechanism holder device for electrical installations**

(30) Priority: 25.03.2002 ES 200200732 U
(71) Applicant: Bticino Quintela, S.L., 08850 Gava (ES)
(72) Inventor: Asensio Pampin, Miquel, Edificio BTicino Quintela, 08850 Gava (ES)
(74) Representative: SUGRANES - VERDONCES - FERREGÜELA

(57) **Abstract**

Mechanism holder device for electrical installations. This device is intended for being coupled to embeddable boxes adapted for housing at least one or more socket bases and the corresponding electrical conductors of the low voltage installation intended for said socket bases. This device comprises a chassis (1) fitted with coupling means (2, 3) to an embedded box (not represented), provided with one or more adjustable frames (7), each being adapted for receiving and supporting a socket base; the chassis (1) is made up of a frame (11) provided in its interior, with at least one longitudinal element (4) and at least one transversal element (5), coplanar to the other, in such a way that they form a plurality of independent housings (6), each of which is adapted for receiving one of said adjustable frames (7), each of said housings (6) and the corresponding adjustable frame (7) being provided with complementary coupling means (8), which allow for the turning in one or both, directions of the adjustable frame (7) and with the socket base fixed to the same, around an axis defined by said coupling means (8).

## Description

### Technical sector of the invention

The object of the invention is a mechanism holder for low voltage electrical installations.

### Background to the invention

Well-known in the art are numerous embodiments of mechanism holder boxes for low voltage electrical installations. Essentially, in those installations in which the conductors are housed in wiring embedded in walls or floors, the mechanism holder boxes for control mechanisms, such as switches or socket bases for connecting electrical appliances to the low voltage mains, comprise an embeddable box, adapted for receiving said mechanisms and an outer frame, the mechanisms being fixed to the embeddable box.

In the known embodiments of mechanism holder boxes for socket bases, the latter are fixed to the embeddable box in a specific position, being arranged for receiving the plug terminals from the connection wire of the electrical appliance, the terminals being plugged into the plug perpendicularly regarding the frontal plane of the socket base.

The fact that the socket bases are fixed to the embeddable box, together with the perpendicular plugging nature of the plug, present the drawbacks which are described below. In embeddable boxes with multiple socket bases, when the plug adopts an elbowed configuration, the wire leading from the same can be freely spread around the inside of the box. However, when it is a straight plug the problem arises of having to bend the wire in order to be able close with the cover. This is sometimes not possible without making deeper embeddable boxes, which means one is compelled to drill deeper into the concrete paving, with an obvious increase in building costs and the resulting increase in the cost of the installation.

In order to solve these problems numerous embodiments of embeddable boxes are known which make it possible for the socket bases to be fixed to the embeddable box in one of several pre-set positions; but the main drawback of such an arrangement of an embeddable box is that the modification of the socket base position requires specialised personnel.

### Explanation of the invention

The mechanism holder device for electrical installations object of the invention, is for embeddable boxes adapted for housing at least one or more socket bases and the corresponding electrical conductors of the low voltage installation intended for the same.

The mechanism holder device of the invention is characterised in that it comprises a chassis fitted with coupling means to an embedded box, provided with one or more adjustable frames, each being adapted for receiving and supporting a socket base, the chassis being made up of a frame provided in its interior, with at least one longitudinal element and at least one transversal element, coplanar to the other, in such a way that they form a plurality of independent housings, each of which is adapted for receiving one of said adjustable frames, each of said housings and the corresponding adjustable frame being provided with complementary coupling means, which allow for the turning in one, or both, directions of the adjustable frame and of the socket base fixed to the same, around an axis defined by said coupling means.

The previously described features of the mechanism holder device object of the invention contributes towards an innovative solution to the drawbacks of the known embodiments of mechanism holder boxes. Indeed, the fact that in the mechanism holder device of the invention the socket base, or bases, are fixed to adjustable frames that the chassis is provided with, constitutes an innovative solution to the earlier described problems with the plugs, since the independent turning of the adjustable frames, and of the socket bases fixed to the same in both directions around a turning axis, makes it possible to adapt the socket base position to the needs of the plug from the connection wire of the electrical appliance.

### Brief description of the drawings

Illustrated in the attached drawings, by way of non-limiting example, is the mechanism holder device for electrical installations object of the invention. In said drawings:
Fig. 1 is a perspective view of a first mode of embodiment of the device of the invention; and
Fig. 2 is a perspective view of a second mode of embodiment of the device of the invention.

### Detailed description of the drawings

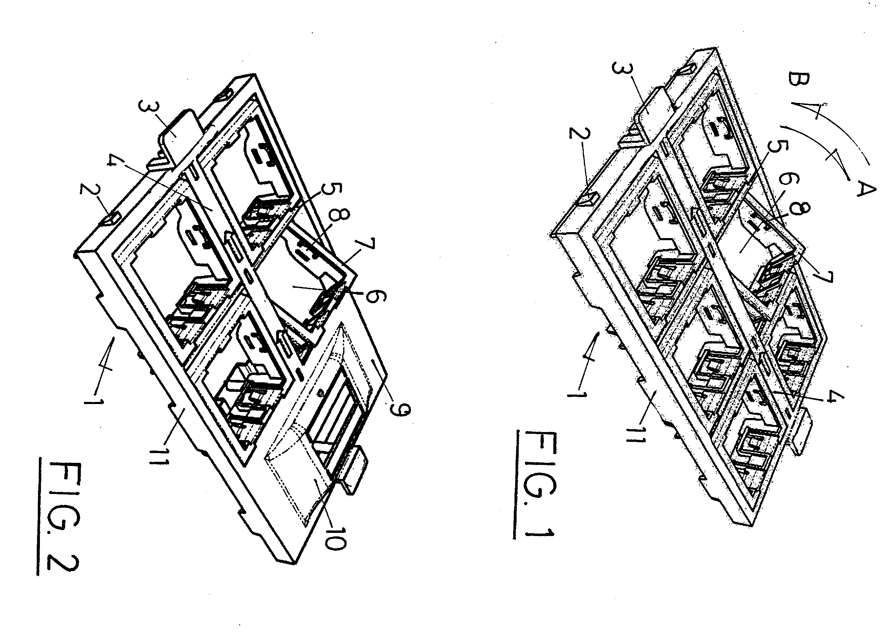

In Figs. 1 and 2 a first and a second mode of embodiment have been represented, respectively, of the mechanism holder device for electrical installations according to the invention. In both cases, and for the purposes of simplification, the representation of the corresponding embeddable box and of the socket bases coupled to the device of the invention have been obviated as they are deemed known; likewise and accordingly, neither the wiring of the socket bases, nor the plugs of the connection wires of the electrical appliances have been represented.

In Fig. 1 it can be appreciated that the mechanism holder device of the invention comprises a one-piece chassis 1 obtained from plastic material, rectangular in outline, although it could also adopt other configurations. The chassis 1 is provided with protuberances 2 for fastening to an embeddable box, not shown, and with two handles 3 for the coupling and uncoupling of the chassis 1 to the embeddable box. In this embodiment example, the chassis 1 is made up of a frame 11, a longitudinal element 4, as if it were a longitudinal beam, and two crossbeam-like transversal elements, arranged coplanar and perpendicularly to each other, configuring a total of six independent quadrangular-shaped housings 6. Each of said housings 6 is adapted for receiving a quadrangular-shaped adjustable frame 7 corresponding to that of nest 6, provided with means, not represented, for fixing to a socket base. Two of the sides facing each of the housings 6 and the corresponding sides of the adjustable frame 7, are provided with respective and complementary coupling means 8 which define a turning axis for the turning of the adjustable frame 7 in one, or in the two directions, indicated as A and B, and as a consequence, the turning of the socket base fixed to the adjustable frame 7.

As has been indicated, in Fig. 2, a second mode of embodiment of the mechanism holder device object of the invention has been represented; also, and for the purposes of simplification, the same numerical references have been used to designate functionally similar components. This second mode of embodiment differs from the earlier first mode by the fact that there are four housings 6, defined by the longitudinal element 4 and by a sole transversal element 5, allowing for the assembly of the same number of adjustable frames 7; furthermore, the chassis 1 is provided on one of its ends with a wall 9 fitted in its centre with a protuberance 10, adapted for the coupling of a manoeuvre mechanism or any other element linked with low voltage installation, such as signalling devices, differential protections, etc.

## Claims

1. Mechanism holder device for electrical installations, for embeddable boxes adapted for housing at least one or more socket bases and the corresponding electrical conductors of the low voltage installation intended for said socket bases, which is **characterised in that** it comprises a chassis (1) fitted with coupling means (2, 3) to an embedded box, provided with one or more adjustable frames (7), each being adapted for receiving and supporting a socket base, the chassis (1) being made up of a frame (11) provided in its interior with at least one longitudinal element (4) and at least one transversal element (5), coplanar to the other, in such a way that they form a plurality of independent housings (6), each of which is adapted for receiving one of said adjustable frames (7), each of said housings (6) and the corresponding adjustable frame (7) being provided with complementary coupling means (8), which allow for the turning in one or both directions of the adjustable frame (7) and of the socket base fixed to the same, around an axis defined by said coupling means (8).
